**Europäisches Patentamt**

**European Patent Office**

**Office européen des brevets**

(11) Veröffentlichungsnummer: **0 218 155**
A2

## (12) EUROPÄISCHE PATENTANMELDUNG

(21) Anmeldenummer: **86113273.6**

(22) Anmeldetag: **26.09.86**

(51) Int. Cl.⁴: **B 29 C 33/10**
// B29L30:00

(30) Priorität: 05.10.85 DE 3535675

(43) Veröffentlichungstag der Anmeldung: **15.04.87**
**Patentblatt 87/16**

(84) Benannte Vertragsstaaten: **AT BE CH DE FR GB IT LI LU NL SE**

(71) Anmelder: **Continental Gummi-Werke Aktiengesellschaft, Königsworther Platz 1 Postfach 169, D-3000 Hannover 1 (DE)**

(72) Erfinder: **Köhler, Heinz, Gemündener Strasse 11, D-3558 Frankenberg (DE)**

(54) **Blähkörper zum Abformen von Fahrzeugluftreifen.**

(57) Die Erfindung geht aus von einem Blähkörper zum Abformen von Fahrzeugluftreifen, wobei dieser Blähkörper sich von dem Mittelbereich aus zu seinen Rändern erstreckende Rillen aufweist, welche Luft abführen sollen. Um unerwünschte Verengungen dieser Rillen bei der Reifenherstellung zu unterbinden, wird aufgrund der Erfindung die Breite der Rillen so gewählt, daß sie zu den Rändern des Blähkörpers hin größer wird.

0218155

*1*

Blähkörper zum Abformen von Fahrzeugluftreifen

Die Erfindung betrifft einen im wesentlichen aus Gummi oder gummiähnlichen Stoffen bestehenden Blähkörper, insbesondere Blähbalg, zum Abformen von Fahrzeugluftreifen mit von seinem Mittelbereich aus zu seinen Rändern sich erstreckenden Rillen zum Luftabführen.

Zum Bombieren des Reifenrohlings, insbesondere aber zum Einformen des Reifenrohlings in der Vulkanisierform bedarf es eines die Innenfläche des Rohlings beaufschlagenden Blähkörpers, der unter Innendruck stehend die gewünschte Verformung des Reifenrohlings und dessen Anpassung an die Innenkontur der Vulkaniserform herbeiführt.

Es ist bekannt, an der Außenfläche des Blähkörpers Rillen vorzusehen, um die zwischen Reifenrohling und dem Blähkörper eingeschlossene Luft zur Seite hin in Richtung auf die Wülste des Rohlings abführen zu können.

Nach bekannten Vorschlägen sind diese Rillen über ihre gesamte Länge hinweg etwa 2 mm breit. Diese Balgausführung hat sich zwar bewährt, jedoch ergeben sich dann Schwierigkeiten, wenn der Balg bzw. Blähkörper vergleichsweise große Durchmesserveränderungen erfährt, im Mittelbereich also auf einen vergleichsweise großen Durchmesser geführt werden muß. Unter diesen Voraussetzungen dehnt sich der Blähkörper im Mittelbereich entsprechend mehr, wodurch eine entsprechende Verbreiterung der Luftabführungskanäle eintritt. Demgemäß ergeben sich durch die Dehnung des Blähkörpers Rillenbreiten, die zum Rand des Blähkörpers hin abnehmen.

Durch die Erfindung sollen diese Nachteile beseitigt werden. Unerwünschte Verengungen der Luftabführungsrillen im Bereich der Ränder des Blähkörpers sollen also vermieden werden.

Zur Lösung dieser Aufgabe erhält erfindungsgemäß der Blähkörper Rillen, deren Breite vom Mittelbereich aus gesehen zu den Rändern des Blähkörpers hin größer wird. Zweckmäßigerweise wird dabei eine sich allmählich größer werdende Rillenbreite angestrebt, insbesondere wird dabei jedoch eine solche Rillenbreite verwendet, die eine relative Verengung der Luftabführungsrillen im Bereich der Blähkörperränder ausschließt, und zwar unter der Bedingung, daß eine bestimmte Durchmesservergrößerung des Blähkörpers in der Mittelpartie eintritt. In diesem Zustand, d.h. beim abgeformten, bombierten Reifen soll die Rillenbreite über die Breite des Blähkörpers hinweg zumindest konstant sein. Die Breitenänderung der Rillen muß also den gewünschten Durchmesserveränderungen des Blähkörpers angepaßt sein.

Ein Ausführungsbeispiel der Erfindung ist in der Zeichnung dargestellt. Es zeigen:

Fig. 1 einen radialen Teilschnitt durch einen in einer Vulkanisierform befindlichen Fahrzeugluftreifen,

Fig. 2 eine Teildraufsicht auf den noch zylindrischen, nicht verformten Blähkörper für eine Vulkanisierform gemäß Fig. 1.

Die gewöhnlich aus einem Oberteil 1 und einem Unterteil 2 bestehende Vulkanisierform dient zur Abformung des Reifenrohlings 3, dessen Bombage und Verpressung mit Hilfe eines an der Innenfläche des Reifenrohlings 3 anliegenden Blähkörpers 4 erfolgt, der aus Gummi besteht und in bekannter Weise an seinen Rändern eingespannt ist (Einspannung nicht dargestellt). Um bei der Verformung des Reifenrohlings 4, also bei dessen Bombage und der weiteren Verpressung die Luft zwischen dem Reifenrohling 3 und den Blähkörpern 4 abführen zu können, ist der Blähkörper 4 an seiner Außenfläche 5 mit von seiner Zenitpartie 6 ausgehenden und sich zu seinen Rändern 7 erstreckenden Rillen 8 versehen, die radial, aber auch im Winkel zur radialen Richtung angeordnet sein können.

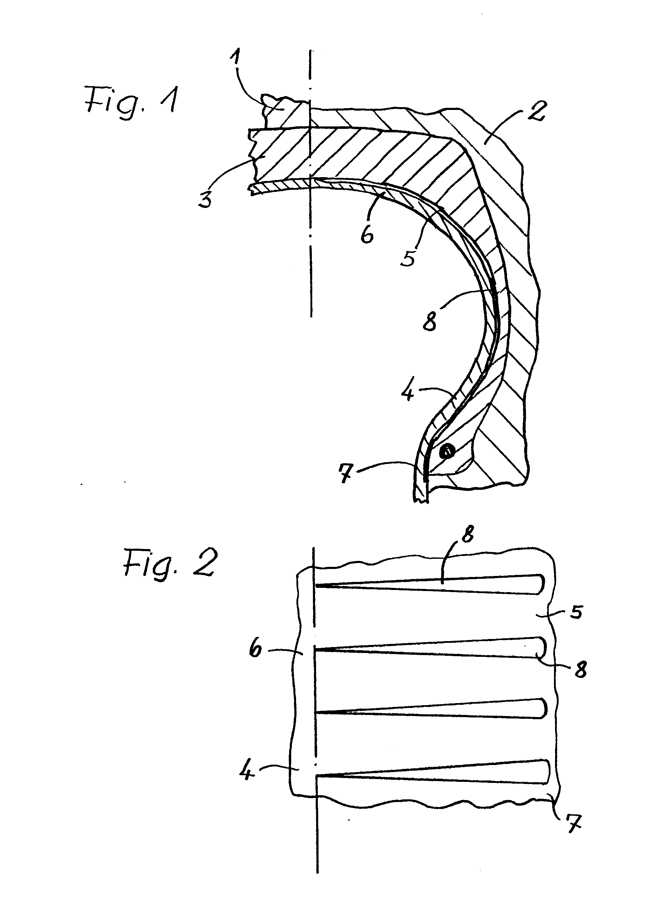

Gemäß Fig. 2 nimmt die Rillenbreite von der Mittelpartie des Blähkörpers 4 aus seitlich nach außen, also zu den Rändern 7 des Blähkörpers 4 hin zu, und zwar zumindest um ein Maß, das die Rillenverbreiterung in der Zenitpartie 6 ausgleicht, die durch die Durchmesservergrößerung der Zenitpartie 6 entsteht.

0218155

## Ansprüche:

1. Im wesentlichen aus Gummi oder dergl. bestehender Blähkörper zum Abformen von Fahrzeugluftreifen mit sich von dem Mittelbereich aus zu seinen Rändern erstreckenden Rillen zum Luftabführen, dadurch gekennzeichnet, daß die Rillenbreite zu den Rändern (7) des Blähkörpers (4) hin größer wird.

2. Blähkörper nach Anspruch 1, dadurch gekennzeichnet, daß die Rillenbreite im Mittelbereich des Blähkörpers (4) (im unverformten Zustand dieses Körpers) um ein solches Maß gegenüber der Rillenbreite am Blähkörperrand größer ist, daß im verformten, geblähten Zustand des Blähkörpers die Breite der Rillen (8) über deren Länge hinweg zumindest im wesentlichen konstant ist.

Hannover, den 11. September 1985
D/Fr                85-68 P/D

Fig. 1

Fig. 2